# EUROPÄISCHE PATENTSCHRIFT

(11) **EP 1 649 174 B1**
(45) Veröffentlichungstag und Bekanntmachung des Hinweises auf die Patenterteilung: **31.10.2007**
(21) Anmeldenummer: 04763367.2
(22) Anmeldetag: 21.07.2004
(51) Int. Cl.: F16B 13/06, B65D 39/12

(54) **SPREIZANKER AUS METALL FÜR WEICHE ODER PORÖSE BAUSTOFFE**
METAL EXPANSION ANCHOR FOR SOFT OR POROUS CONSTRUCTION MATERIALS
DISPOSITIF D'ANCRAGE EXTENSIBLE METALLIQUE CON U POUR DES MATERIAUX DE CONSTRUCTION TENDRES OU POREUX

(30) Priorität: 02.08.2003 DE 10335468
(43) Veröffentlichungstag der Anmeldung: 26.04.2006
(73) Patentinhaber: fischerwerke Artur Fischer GmbH & Co. KG, 72178 Waldachtal (DE)
(72) Erfinder: HACKER, Oliver, 72160 Horb (DE); LINKA, Martin, 72160 Horb (DE); SCHÄUFFELE, Jürgen, 72290 Lossburg (DE)
(74) Vertreter: Suchy, Ulrich Johannes
(86) Internationale Anmeldenummer: PCT/EP2004/008125
(87) Internationale Veröffentlichungsnummer: WO 2005/017373

(56) Entgegenhaltungen:
- FR-A- 2 594 501
- US-A- 1 851 292
- US-A- 3 709 089
- US-A- 3 999 459
- US-A- 4 983 082

## Beschreibung

Die Erfindung betrifft eine Befestigungsanordnung mit den Merkmalen des Oberbegriffs des Anspruchs 1.

Die Befestigung an Untergründen aus weichen oder porösen Baustoffen ist problematisch, da derartige Untergründe nur eine geringe Tragfähigkeit bieten und schon beim Setzen eines Ankers die Oberflächen, beispielsweise in einer Bohrung, leicht beschädigt werden können. Dabei ist zu beachten, dass beispielsweise Porenbeton in einer großen Bandbreite von Festigkeiten verwendet wird. Aufgrund dieser Umstände werden in diesen Untergründen häufig Kunststoffdübel oder chemische Befestigungen verwendet. Sollen jedoch feuersichere Befestigungen hergestellt werden, so ist die Verwendung von Spreizankern aus Metall unerlässlich. Ein derartiger Spreizanker ist beispielsweise aus dem Dokument DE 100 200 482 A1 bekannt. Der bekannte Spreizanker weist eine Ankerstange mit einem Außengewinde als Befestigungsmittel für einen Gegenstand sowie eine Spreizhülse auf. Die Ankerstange weist außerdem einen sich in Einbringrichtung radial erweiternden Spreizabschnitt auf, auf dem die Spreizhülse verschiebbar aufgesetzt ist. Die Spreizhülse weist einen Grundkörper und hieran angeordnet Spreizzungen auf. Beim Setzen des Spreizankers wird die Ankerstange mittels einer Mutter auf dem Außengewinde der Ankerstange in die Spreizhülse eingezogen. Dabei ist die Spreizhülse an der Mutter als Gegenlager abgestützt. Hierdurch werden die Spreizzungen radial nach außen aufgespreizt. Der Nachteil eines derartigen Spreizankers besteht in der Tatsache, dass sich der Spreizanker bei sehr weichen Baustoffen beim Anziehen der Mutter als Ganzes leicht mitdreht, wodurch ein Verspreizen unmöglich wird.

Der Erfindung liegt daher die Aufgabe zu Grunde, eine Befestigungsanordnung der eingangs genannten Art zu schaffen, der auch bei sehr weichen Baustoffen sicher verankerbar ist.

Diese Aufgabe wird erfindungsgemäß durch eine Befestigungsanordnung mit den Merkmalen des Anspruchs 1 gelöst. Bei dem erfindungsgemäßen Spreizanker ist das Außenprofil der Spreizhülse als Mehrkant ausgebildet und die Ankerstange ist mit der Spreizhülse drehgekoppelt. Beim Einbringen des Spreizankers in das Bohrloch graben sich die Kanten des Mehrkants - beispielsweise ein Vierkant - in die Bohrlochwandung ein. Die Spreizhülse ist damit gegen Verdrehen gesichert. Aufgrund der Drehkopplung mit der Spreizhülse gilt das gleiche für die Ankerstange. Wird im Weiteren die Mutter oder dgl. auf der Ankerstange angezogen, so kann sich diese nicht mitdrehen. Dies sichert, dass die Spreizhülse problemlos verspreizt werden kann. Gegenüber abstehenden Rippen, Nasen oder dgl. an der Spreizhülse oder der Ankerstange, wie sie auch von anderen Spreizankern bekannt sind, hat sich die Ausbildung der Spreizhülse mit einem Mehrkant als Außenprofil als besonders günstig erwiesen, da mit einer einfachen Geometrie eine großflächige Einbringung des Anzugsmoments in den porösen Untergrund erfolgt. Unterstützt werden kann dies dadurch, dass auch die Ankerstange im Bereich des dem Bohrlochgrund zugewandten Ankerendes eine drehsichernde Außenkontur aufweist.

Bei der geometrischen Auslegung des Mehrkants ist darauf zu achten, dass dessen Kanten sich einerseits nicht zu tief in die Bohrlochwandung eingraben müssen, da dies das Einbringen des Ankers in das Bohrloch erschweren würde. Andererseits muss gewährleistet sein, dass das umgebende Material beim Aufbringen des zum Verspreizen notwendigen Moments nicht zerstört wird. Um das zum Verspreizen notwendige Moment, insbesondere zu Beginn des Spreizvorgangs, möglichst gering zu halten, sieht eine bevorzugte Ausführungsform vor, dass die Spreizzungen entlang von geraden Sollbiegelinien am Grundkörper angebunden sind. Dies kann beispielsweise dadurch erreicht werden, dass jede Fläche des Mehrkants vom Grundkörper in eine Spreizzunge übergeht, dass heißt die Spreizzungen an den Kanten von einander getrennt sind. Gegenüber den bei Spreizankern üblichen gekrümmten Sollbiegelinien aufgrund der zylindrischen Form der Spreizhülsen, ist das zum Verspreizen notwendige Biegemoment deutlich geringer.

Vorzugsweise ist die Ankerstange zweiteilig und weist ein Ankergrundteil auf, dessen Außendurchmesser im Bereich des Spreizabschnitts reduziert ist und ein zusätzliches Gewinde aufweist. Auf diesem Gewinde ist eine Konusmutter als zweites Bauteil aufgeschraubt. Dies ermöglicht, dass auch der Innendurchmesser der Spreizhülse im Bereich des Spreizabschnitts reduziert wird und die Spreizhülse vom konusmutterseitigen Ende des Ankergrundteils her montiert werden kann. Die beiden Reduzierungen wirken dabei als axialer Anschlag. Dies hat insbesondere den Vorteil, dass der Spreizanker auch ohne Mutter oder dgl. als Gegenlager für die Spreizhülse in das Bohrloch eingesteckt werden kann, beispielsweise um erst zu einem späteren Zeitpunkt den Gegenstand zu befestigen.

Weiterhin sieht eine bevorzugte Ausführungsform der Erfindung vor, dass sich an den Grundkörper der Spreizhülse eine Distanzhülse anschließt, die ebenfalls axial verschiebar auf der Ankerstange angeordnet ist. Hierdurch wird vermieden, dass die Spreizhülse, die besonders fest aber auch besonders biegbar sein muss, sehr lang ausgeführt werden muss. Die Distanzhülse dient also zur Übertragung der axialen Spreizkräfte von der Mutter auf die Spreizhülse. An ihrem dem Ankerende abgewandten Ende weist die Distanzhülse in einer bevorzugten Ausführung eine Erweiterung ihres Außendurchmessers auf. Diese Erweiterung dient der Querabstützung eines zu befestigenden Gegenstandes, wenn der Anker durch eine Bohrung dieses Gegenstandes hindurch gesetzt wird. Diese Bohrung muss so groß sein, dass die Spreizhülse mit ihrem als Mehrkant ausgebildeten Außenprofil durchsteckbar ist. Um eine weitgehend spielfreie Querabstützung des Gegenstands zu gewährleisten, muss daher der genannte erweiterte Außendurchmesser der Distanzhülse mindestens die Drehsicherungskanten umschreiben. Die Distanzhülse kann hierzu beispielsweise aus zwei Rohrstücken mit unterschiedlichen Durchmessern gebildet werden.

Die Erfindung wird nachfolgend anhand eines in der Zeichnung dargestellten Ausführungsbeispiels näher erläutert. Es zeigen:
- Figur 1: eine perspektivische Darstellung des erfindungsgemäßen Spreizankers; und
- Figur 2: eine Schnittdarstellung des Spreizankers.

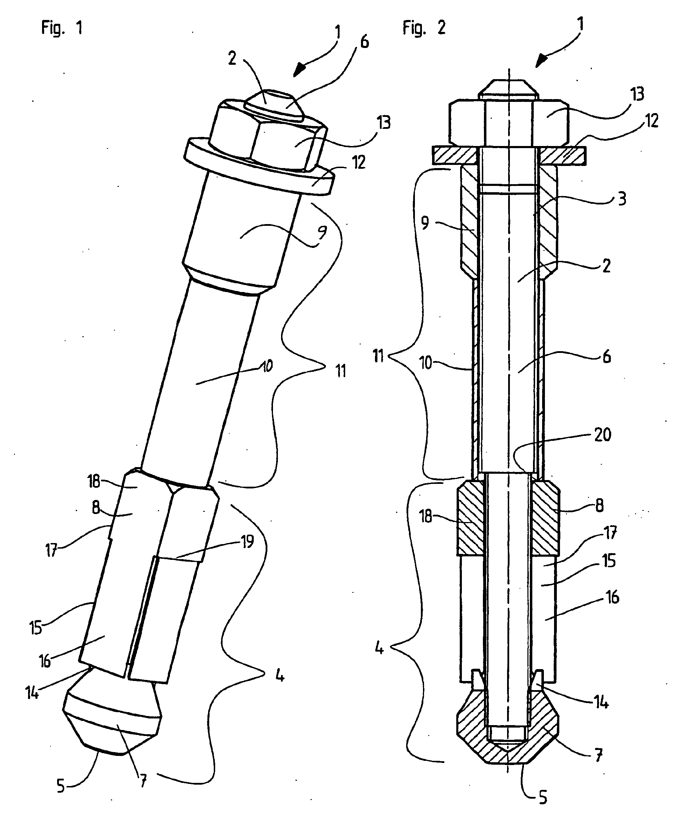

Figur 1 und 2 zeigen einen erfindungsgemäßen Spreizanker 1 aus Metall. Der Spreizanker 1 dient der Befestigung eines Bauteils an einem weichen Untergrund, beispielsweise Porenbeton (nicht dargestellt). Der Spreizanker 1 weist eine Ankerstange 2 mit einem Außengewinde 3 als Befestigungsmittel für das Bauteil und einem im Durchmesser reduzierten Spreizabschnitt 4 auf, der sich in Richtung des Ankerendes 5 konisch erweitert. Die Ankerstange 2 ist zweiteilig durch ein Ankergrundteil 6 sowie eine hierauf aufgeschraubte Konusmutter 7 gebildet. Auf dem Spreizabschnitt 4 ist eine Spreizhülse 8 axial verschiebbar aufgesetzt. An diese schließen sich zwei Rohre 9 und 10 zur Bildung einer Distanzhülse 11 an.

Zum Befestigen des Bauteils wird der Spreizanker 1 in ein Bohrloch des Untergrunds eingeschoben. Dies kann in Durchsteckmontage durch das Bauteil erfolgen, oder das Bauteil wird nachträglich aufgesetzt. Die Unterlagscheibe 12 und die Mutter 13 dienen als Gegenlager beim Verspreizen der Spreizhülse 8. Dabei wird die Ankerstange 2 mit der Konusmutter 7 in die Spreizhülse 8 eingezogen. Die dabei wirkenden axialen Kräfte werden von der Konusmutter 7 über die Spreizhülse 8, die Distanzhülse 11 und die Unterlagscheibe 12 auf die Mutter 13 übertragen. Der Spreizanker 1 ist hier im Zustand vor dem Anziehen der Mutter 13 dargestellt. Damit die Ankerstange 2 dabei nicht mitdreht, was ein Verspreizen der Spreizhülse 8 unmöglich machen würde, weist die Konusmutter 7 zwei Nasen 14 auf, die als Drehkopplung in die Schlitze 15 zwischen den Spreizzungen 16 der Spreizhülse 8 eingreifen. Die Spreizhülse 8 wiederum ist als Vierkant 17 ausgeführt. Beim Einführen des Spreizankers 1 in den weichen Untergrund gräbt sich der Vierkant 17 in die Bohrlochwandung ein. Damit ein leichtes Einführen des Spreizankers 1 in das Bohrloch gewährleistet ist, wird dieses im Durchmesser etwa dem Außendurchmesser der Konusmutter 7 entsprechend erstellt. Selbstverständlich könnte auch die Konusmutter 7 selbst beispielsweise als Vierkant ausgeführt sein und so zur Sicherung gegen Verdrehen beitragen.

Beim Verspreizen der Spreizhülse werden die Spreizzungen 16 radial nach außen gebogen, graben sich in den umgebenden weichen Untergrund ein und bilden hierdurch einen Hinterschnitt. Aufgrund der Anbindung der Spreizzungen 16 an den Grundkörper 18 des Spreizhülse 8 entlang einer geraden Sollbiegelinie 19 können die Spreizzungen 16 deutlich leichter aufspreizen, als dies bei den sonst üblichen zylindrischen Spreizhülsen der Fall ist. Hierdurch wird das notwendige Drehmoment zum Verspreizen vermindert, wodurch die Neigung zum Durchdrehen im Bohrloch selbst bei eher großen Bohrlochdurchmessern gering ist und das Verankern erleichtert wird.

Soll der Spreizanker 1 in Durchsteckmontage gesetzt werden, das heißt durch eine Bohrung des zu befestigenden Gegenstands hindurch, muss diese Bohrung so groß sein, dass die Spreizhülse 7 hindurch gesteckt werden kann. Um dem Gegenstand im gesetzten Zustand eine gute Querabstützung zu geben, weist daher die Distanzhülse 11 an ihrem dem Ankerende 5 entgegengesetzten Ende einen erweiterten Außendurchmesser auf.

Soll dagegen zunächst der Spreizanker 1 in das Bohrloch eingeschoben werden und dann der Gegenstand montiert werden (Vorsteckmontage), so können die Mutter 13 und die Unterlegscheibe 12 sowie gegebenenfalls das Rohr 9 zunächst demontiert bleiben und erst nach dem Aufsetzen des Gegenstands zu dessen Sicherung montiert werden. Dadurch, dass sowohl der Innendurchmesser der Spreizhülse 8 als auch der Außendurchmesser des Ankergrundteils 6 im Bereich des Spreizabschnitts 4 reduziert sind, kann sich die Spreizhülse 8 am Absatz 20 (Figur 2) abstützen. Hierdurch kann der Vierkant 17 der Spreizhülse 8 in den umgebenden Untergrund eingegraben werden, ohne sich axial gegenüber dem Ankergrundteil 6 zu verschieben.

## Patentansprüche

1. Befestigungsanordnung mit einem Untergrund aus Porenbeton und mit einem Spreizanker (1) aus Metall für welche oder poröse Baustoffe, wobei der Spreizanker (1) in einem Bohrloch im Untergrund angeordnet ist, und wobei der Spreizanker (1) eine Ankerstange (2) mit Befestigungsmitteln (3) und einem sich in Einbringrichtung radial erweiternden Spreizabschnitt (4) aufweist, auf den eine Spreizhülse (8) mit einem Grundkörper (18) und hieran angeordneten Spreizzungen (16) axial verschiebbar aufgesetzt ist, **dadurch gekennzeichnet, dass** das Außenprofil der Spreizhülse (8) als Mehrkant (17) ausgebildet und die Ankerstange (2) mit der Spreizhülse (8) drehgekoppelt ist, und dass das Bohrloch derart dimensioniert ist, dass sich die Kanten des Mehrkants (17) in die Bohrlochwandung eingraben.

2. Befestigungsanordnung nach Anspruch 1, **dadurch gekennzeichnet, dass** die Spreizzungen (16) entlang von geraden Sollbiegelinien (20) am Grundkörper (18) angebunden sind.

3. Befestigungsanordnung nach Anspruch 1, **dadurch gekennzeichnet, dass** die Ankerstange (2) zweiteilig durch ein Ankergrundteil (6) sowie eine hierauf aufgeschraubte Konusmutter (7) gebildet ist, und wobei sowohl der Innendurchmesser der Spreizhülse (8) als auch der Außendurchmesser des Ankergrundteils (6) im Bereich des Spreizabschnitts (4) reduziert sind.

4. Befestigungsanordnung nach Anspruch 1, **dadurch gekennzeichnet, dass** der Spreizanker (1) eine Distanzhülse (11) aufweist, die sich axial verschiebbar auf der Ankerstange (2) angeordnet an den Grundkörper (18) der Spreizhülse (8) anschließt.

5. Befestigungsanordnung nach Anspruch 4, **dadurch gekennzeichnet, dass** die Distanzhülse (11) an ihrem dem Ankerende (5) abgewandten Ende einen erweiterten Außendurchmesser aufweist.

## Claims

1. Fastening arrangement comprising a substrate of foam concrete and comprising a metal expansible anchor (1) for soft or porous building materials, the expansible anchor (1) being arranged in a hole drilled in the substrate and the expansible anchor (1) comprising an anchor rod (2), which has fastening means (3) and an expansion portion (4) which widens out radially in the direction of introduction and on which an expansion sleeve (8) comprising a main body (18) and expansion tongues (16) arranged thereon is mounted in axially displaceable manner, **characterised in that** the external profile of the expansion sleeve (8) is in the form of a polygon (17) and the anchor rod (2) is coupled with the expansion sleeve (8) as regards rotation, and **in that** the drilled hole is so dimensioned that the edges of the polygon (17) dig into the walls of the drilled hole.

2. Fastening arrangement according to claim 1, **characterised in that** the expansion tongues (16) are joined to the main body (18) along straight intended bending lines (20).

3. Fastening arrangement according to claim 1, **characterised in that** the anchor rod (2) is formed of two parts, a main anchor part (6) and a conical nut (7) screwed thereon, both the internal diameter of the expansion sleeve (8) and the external diameter of the main anchor part (6) in the region of the expansion portion (4) being reduced.

4. Fastening arrangement according to claim 1, **characterised in that** the expansible anchor (1) has a spacer sleeve(11) which is arranged in axially displaceable manner on the anchor rod (2), adjacent to the main body (18) of the expansion sleeve (8).

5. Fastening arrangement according to claim 4, **characterised in that** the spacer sleeve (11) has, at its end remote from the end (5) of the anchor, a widened external diameter.

## Revendications

1. Dispositif de fixation avec un support en béton alvéolé et avec un ancrage à expansion (1) en métal pour matériaux de construction souples ou poreux, l'ancrage à expansion (1) étant disposé dans un trou foré dans le support et l'ancrage à expansion (1) comportant une tige d'ancrage (2) avec des moyens de fixation (3) et une section d'expansion (4) qui s'élargit radialement dans le sens d'insertion, sur laquelle une douille d'expansion (8) avec un corps de base (18) et des languettes d'expansion (16) disposées sur elles est placée de manière à pouvoir se déplacer dans le sens axial, **caractérisé en ce que** le profil extérieur de la douille d'expansion (8) est réalisé sous forme de polygone (17) et la tige d'ancrage (2) couplée en rotation avec la douille d'expansion (8) et **en ce que** le trou foré est dimensionné de telle manière que les bords du polygone (17) s'enfoncent dans la paroi du trou foré.

2. Dispositif de fixation selon la revendication 1, **caractérisé en ce que** les languettes d'expansion (16) sont attachées au corps de base (18) le long de lignes rectilignes prévues pour la flexion (20).

3. Dispositif de fixation selon la revendication 1, **caractérisé en ce que** la tige d'ancrage (2) est formée de deux parties, à savoir un élément de base d'ancrage (6) ainsi qu'un écrou de cône (7) vissé dessus, le diamètre intérieur de la douille d'expansion (8) ainsi que le diamètre extérieur de l'élément de base d'ancrage (6) étant réduits dans la zone de la section d'expansion (4).

4. Dispositif de fixation selon la revendication 1, **caractérisé en ce que** l'ancrage d'expansion (1) comporte une douille d'écartement (11) qui, disposé sur la tige d'ancrage (2) de manière à pouvoir se déplacer dans le sens axial, prolonge le corps de base (18) de la douille d'expansion (8).

5. Dispositif de fixation selon la revendication 4, **caractérisé en ce que** la douille d'écartement (11) comporte un diamètre extérieur élargi à son extrémité détournée de l'extrémité de l'ancrage (5).
